# EUROPÄISCHE PATENTSCHRIFT

(11) **EP 2 448 108 B1**
(45) Veröffentlichungstag und Bekanntmachung des Hinweises auf die Patenterteilung: **05.12.2018**
(21) Anmeldenummer: 11008172.6
(22) Anmeldetag: 10.10.2011
(51) Int. Cl.: H02P 6/18, H02P 21/24, A01B 59/00, A01D 69/02

(54) **Landwirtschaftliche Arbeitsmaschine**
Agricultural work machine
Machine de travail agricole

(30) Priorität: 19.10.2010 DE 102010048876
(43) Veröffentlichungstag der Anmeldung: 02.05.2012
(73) Patentinhaber: PÖTTINGER Landtechnik GmbH, 4710 Grieskirchen (AT)
(72) Erfinder: Baldinger, Markus, Dipl.-Ing., 4084 St. Agatha (AT); Baldinger, Martin, Dr., 4722 Peuerbach (AT); Hofinger, Markus, 4721 Altschwendt (AT)
(74) Vertreter: Thoma, Michael

(56) Entgegenhaltungen:
- EP-A1- 1 746 718
- EP-A1- 2 220 928
- EP-A2- 0 864 457
- EP-A2- 1 645 456
- WO-A1-2010/122055
- H.-G. Fröhlich ET AL: "Durchstarten mit elektrischen Antrieben in mobilen Landmaschinen - funktionsintegrierte Dreschtrommel", Powerworld, 6. Jhrg., 2. Ausgabe, 2010, 31 May 2010 (2010-05-31), pages 32-35, XP055147162, Retrieved from the Internet: URL:http://www.techtex-verlag.com/fileadmi n/powerworld/pdf/Beitr%C3%A4ge_2010/POW2-2 010_S32-35_Durchstarten_mit.pdf [retrieved on 2014-10-16]

## Beschreibung

Die vorliegende Erfindung betrifft eine landwirtschaftliche Arbeitsmaschine, insbesondere in Form einer an einen Schlepper anbaubaren Ernte- und/oder Bodenbearbeitungsmaschine, mit zumindest einem von einem Antrieb antreibbaren Arbeits- und/oder Stellaggregat zum Ausführen einer landwirtschaftlichen Funktion, wobei der Antrieb zumindest einen Elektromotor aufweist und eine Regelvorrichtung zur Regelung der Drehzahl und/oder des Drehmoments des Antriebs vorgesehen ist.

Bei landwirtschaftlichen Anbaugeräten wie beispielsweise einem Ladewagen, einer Mähmaschine oder eine Heuwerbungsmaschine in Form eines Zetters oder Schwaders, oder einer Bodenbearbeitungsmaschine wie beispielsweise einer Kreiselegge werden die Arbeitsaggregate, die die landwirtschaftlichen Funktionen des jeweiligen Arbeitsaggregats ausführen, üblicherweise durch einen mechanischen Antrieb angetrieben, der über eine Gelenkwelle von der Zapfwelle des Schleppers her gespeist wird. Alternativ ist auch vorgeschlagen worden, hydraulische Antriebe in Form von Hydromotoren vorzusehen. Dabei sind die genannten landwirtschaftlichen Funktionen beispielsweise die Erntegutbearbeitung, was im Falle eines Ladewagens die Aufnahme des Ernteguts vom Boden durch eine Pickup-Stachelwalze, die Förderung des aufgenommenen Ernteguts in dem Erntegutspeicher mittels eines Förderrotors und auch das Abladen des Ernteguts mittels Dosierwalzen umfasst. Bei einer Mähmaschine ist das unterschiedlich hohe und/oder dichte Halmgut abzuschneiden und gegebenenfalls mittels eines nachgeschalteten Konditionierers zu konditionieren und einem Querförderband seitlich wegzufördern, um das abgeschnittene Halm- und Blattgut in einem Schwad abzulegen. Bei entsprechend anderen Anbaugeräten sind entsprechend andere landwirtschaftliche Funktionen auszuführen, wobei mit "landwirtschaftliche Funktionen" insbesondere die Kernaufgaben des jeweiligen Anbaugeräts gemeint sind, die üblicherweise einer höheren Leistungsaufnahme bedürfen und einer variierenden äußeren Belastung durch Feld-, Erntegut- und/oder Bodengegebenheiten beaufschlagt sind.

Vereinzelt wurde in jüngerer Zeit für die Arbeitsaggregate von Landmaschinen auch die Verwendung von Elektromotoren zu deren Antrieb vorgeschlagen. Hierbei werden üblicherweise Gleichstrommotoren mit einer Versorgungsspannung von 12 VDC verwendet, bei denen eine Drehzahlrückführung vorgesehen ist, um die Drehstellung bzw. die Drehgeschwindigkeit des Motors und des damit verbundenen Aggregats bestimmen zu können.

Beispielsweise zeigt die DE 10 2007 024 644 A1 einen Schlepper, der zu diesem Zweck mit einer Leistungselektronik-Schnittstelle versehen ist, um die von Elektromotoren getriebenen Arbeitsaggregate diverser Landmaschinen speisen zu können. Weiterhin zeigt die DE 10 2007 038 510 A1 einen Düngerstreuer, bei dem die Verteilorgane von einem Elektromotor angetrieben werden. Ferner beschreibt die DE 10 2007 024 645 A1 ein elektrisches Anbaugerät mit einem Elektroantrieb, der vom Schlepper her mit Strom versorgt wird. Die DE 10 2005 019 362 beschreibt die nähere Ausgestaltung einer elektrischen Schnittstelle zum Übertragen elektrischer Energie zwischen einem Schlepper und einem daran ankoppelbaren landwirtschaftlichen Arbeitsgerät. Ferner schlägt die DE 10303050 A1 zur Versorgung eines Anbaugeräts mit ausreichend elektrischer Energie vor, an die Zapfwelle des Schleppers einen Generator zu koppeln, der elektrische Lasten des Traktors und des Anbaugeräts mit einer Generatorspannung antreibt, die deutlich über der üblichen 12V-Bordnetz-Spannung von Schleppern liegt.

Darüber hinaus zeigt die WO 2010/122055 A1, die nach dem Prioritätstag der vorliegenden Anmeldung veröffentlicht worden ist, eine Erntemaschine mit einer elektrisch angetriebenen Trommel, deren Antrieb sensorlos ausgebildet sein kann.

Die EP 2 220 928 A1 offenbart ein landwirtschaftliches Anbaugerät, das mit einem Elektromotor angetrieben wird.

EP 0 864 457 A2 beschreibt ein Antriebssystem für Nutzfahrzeuge, in dem sensorlose Elektromotoren offenbart werden.

Die EP 1 645 456 A2 zeigt eine landwirtschaftliche Arbeitsmaschine, die ihre Fahrgeschwindigkeit verringert, wenn festgestellt wird, dass bspw. eine Mähklinge eines Mähwerks einen größeren Schneidwiderstand aufgrund dichterem Gras aufweist.

Um das Arbeitsaggregat an variierende Belastungen, Fahrgeschwindigkeiten und Feldbedingungen anpassen zu können, werden das Drehmoment und die Drehgeschwindigkeit der Antriebe variiert und üblicherweise in Abhängigkeit verschiedener Betriebsparameter von einer Regelvorrichtung geregelt. Hierzu ist die Drehzahl des Arbeitsaggregats bzw. dessen Antriebs zu bestimmen. Wird das jeweilige Arbeitsaggregat stufenweise verstellt, beispielsweise der Kratzboden eines Ladewagens ein Stück weit nach hinten gefahren, um den Druck am vorderen Ende des Futtergutspeichers zu reduzieren, ist überdies auch noch die Drehstellung des Antriebs bzw. Elektromotors zu bestimmen, damit die Regelvorrichtung das Aggregat gezielt auf den jeweils bestimmten Sollwert fahren kann.

Die an den Elektromotoren hierzu üblicherweise vorgesehen Drehgeber sind bei den rauen landwirtschaftlichen Arbeitsbedingungen, denen die Maschinen ausgesetzt sind, nicht nur störanfällig, sondern vergrößern auch den benötigten Bauraum für den Elektroantrieb, der gerade bei Arbeitsaggregaten mit walzen- bzw. rotorförmigen Antriebsteilen wie beispielsweise dem Schneidrotor eines Mähwerks, dem Pickuprotor eines Ladewagens oder der Schwaderglocke einer Heuwerbungsmaschine nicht zur Verfügung steht, da dort der Elektromotor zum Schutz vor den rauen Umgebungsbedingungen in das Innere des walzen- bzw. rotorförmigen Antriebsteils zu integrieren ist.

Hiervon ausgehend liegt der vorliegenden Erfindung die Aufgabe zugrunde, eine verbesserte landwirtschaftliche Arbeitsmaschine der genannten Art zu schaffen, die Nachteile des Standes der Technik vermeidet und Letzteren in vorteilhafter Weise weiterbildet. Insbesondere soll die Empfindlichkeit der Drehzahl- und/oder Drehmomentbestimmung bei rauen landwirtschaftlichen Betriebsbedingungen reduziert und der an den Antriebsteilen des landwirtschaftlichen Arbeitsaggregat benötigte Platz für den Elektromotor und dessen Zuleitungen reduziert werden, ohne eine präzise Regelbarkeit des Antriebs zu opfern.

Erfindungsgemäß wird diese Aufgabe durch eine landwirtschaftliche Arbeitsmaschine nach Anspruch 1 gelöst. Bevorzugte Ausgestaltungen der Erfindung sind Gegenstand der abhängigen Ansprüche.

Es wird also unter anderem vorgeschlagen, die üblicherweise an den Elektromotoren verwendeten Drehgeber zu eliminieren und die Rotorstellung des Elektromotors durch die Phasenlage des Drehspannungsnetzes zu bestimmen. Dieses Wechselfeld wandert mit den Polen rund um den Umfang des Motors, wodurch die Drehstellung und die Drehzahl des Motors festgestellt werden kann. Erfindungsgemäß ist der Elektromotor drehgeberlos ausgebildet, wobei die Regelvorrichtung eine Bestimmungseinrichtung zur Bestimmung der Drehstellung und Drehzahl des Elektromotors aus der Phasenlage des am Elektromotor anliegenden Drehspannungsnetzes aufweist. Hierdurch kann auf die übliche Drehgebersensorik und mechanische Drehzahlsensoren am Elektromotor sowie deren Signalleitungen verzichtet werden, wodurch der Elektromotor kompakter ausgebildet und in Einbausituationen mit beschränktem Platzangebot besser verwendet werden kann sowie die Empfindlichkeit gegenüber rauen Betriebsbedingungen reduziert wird.

Die Bestimmung der Drehstellung und der Drehzahl des Elektromotors aus der Phasenlage des am Elektromotor anliegenden Drehspannungsnetzes kann grundsätzlich in verschiedener Art und Weise erfolgen. Insbesondere kann die Bestimmungseinrichtung Erfassungsmittel zur Erfassung der räumlichen, magnetischen Leitwertschwankungen aufweisen, aus denen die Drehstellung des Elektromotors bestimmbar ist. Vorzugsweise kann hierbei mittels geeigneter Erfassungsmittel ein Stromanstieg und/oder die Spannung des Zwischenkreises und/oder der aktuelle Schaltzustand des Umrichters erfasst werden, woraus dann die Bestimmungsmittel die Leitwertschwankung bestimmen, aus der dann wiederum die Drehstellung des Elektromotors berechnet wird.

Die sensorlose Drehzahlbestimmung bei Elektromotoren ist als solche bereits bekannt und wird beispielsweise gerne an Antrieben der Modellbautechnik eingesetzt. Überraschenderweise lässt sich die sensorlose Drehzahlbestimmung jedoch auch hervorragend für die Regelung von elektrischen Antrieben für die Arbeits- bzw. Stellaggregate von landwirtschaftlichen Arbeitsmaschinen verwenden, wo sich durch die reduzierte Empfindlichkeit der Sensorik und des reduzierten Platzbedarfs besondere Vorteile ergeben. Bezüglich der konkreten Ausbildung der genannten Bestimmungseinrichtung zur Bestimmung der Drehstellung und Drehzahl des Elektromotors aus der Phasenlage des am Elektromotor anliegenden Drehspannungsnetzes wird auf die Schriften AT 502 615 B1 und AT 406 722 B verwiesen.

Um die Elektronik des Reglers und der Drehstellungs- und Drehzahlbestimmung gänzlich vom Elektromotor und dessen Einbausituation abzukoppeln, kann in vorteilhafter Weiterbildung der Erfindung vorgesehen sein, dass die Regelvorrichtung einschließlich der vorgenannten Bestimmungseinrichtung zur Bestimmung der Drehstellung und Drehzahl eine vom Elektromotor separat ausgebildete, vom Elektromotor lösbare Baugruppe bildet, die durch den Umrichter der Leistungselektronik mit dem Elektromotor verbindbar ist. Vorteilhafterweise ist der Elektromotor also auf der Motorseite des Umrichters bzw. zwischen Frequenzumrichter und Elektromotor sensorlos ausgebildet. Sensorlos meint dabei nicht zwangsweise, dass auf jegliche Art von Sensoren verzichtet wird; beispielsweise können Temperatursensoren für eine Temperaturmessung beispielsweise der Wicklungstemperatur durchaus vorgesehen sein. Verzichtet werden kann jedoch auf Drehgeber und andere Sensoren für die Bestimmung der Rotorposition, der Rotordrehzahl oder des Rotordrehmoments. Die Bestimmung der Phasenlage des Drehspannungsnetzes und hieraus der Drehstellung und Drehzahl des Elektromotors erfolgt auf der Seite der dem Umrichter vorgeschalteten Baugruppen der Leistungs- und Steuerungselektronik.

Alternativ zu einer Ausbildung mit separaten Baugruppen kann jedoch in Weiterbildung der Erfindung auch ein Komplettantrieb vorgesehen werden, bei dem ein bezüglich der Drehzahl und des Drehmoments sensorloser Motor mit einem Frequenzumrichter zu einer geschlossenen Baugruppe zusammengefasst ist.

Vorteilhafterweise kann in Weiterbildung der Erfindung die genannte Regelvorrichtung und/oder die vorgenannte Bestimmungseinrichtung zusammen mit dem Umrichter der Leistungselektronik eine modulartige Baugruppe bilden, die eingangsseitig mit der Spannungsversorgung verbunden ist und ausgangsseitig mit dem Elektromotor verbunden ist. Als Eingangssignal kann die genannte Baugruppe vorteilhafterweise eine Solldrehzahl und/oder ein Sollmoment erhalten. Zusammen mit den am Umrichter auftretenden Strom- und/oder Spannungswerten können hieraus von der genannten Bestimmungseinrichtung die Rotorposition und/oder die Drehzahl bestimmt werden, woraus dann der Regler zur Drehzahl- oder Drehmomentregelung ein entsprechendes Signal für den Umrichter erzeugt.

Die Landmaschine selbst kann hierbei grundsätzlich in verschiedenen Ausbildungen in der genannten Art und Weise mit einem Elektromotor zum Antreiben des Arbeitsaggregats versehen und einer selbstlernenden Regeleinrichtung ausgestattet sein. Gemäß der Erfindung ist das Anbaugerät als Ladewagen ausgebildet, der eine Pickup mit einer Stachelwalze zur Aufnahme von Erntegut vom Boden aufweist. Nach einer Fortbildung der Erfindung weist der Ladewagen ferner einen Förderrotor zur Förderung des aufgenommenen Ernteguts in einen Erntegutspeicher und/oder eine Dosierwalze zum Entladen des Ernteguts aus dem Erntegutspeicher auf, wobei der elektrische Antrieb umfassend einen Elektromotor und ein diesem gegebenenfalls zugeordnetes Getriebe die genannte Stachelwalze, den Förderrotor und/oder die Dosierwalze antreiben kann. Die Regelung kann hierbei den jeweiligen Elektromotor in der genannten Weise regeln. Alternativ oder zusätzlich zu dem elektromotorischen Antrieb der Stachelwalze der Pickup, des Förderrotors und/oder der genannten Dosierwalze kann in Weiterbildung der Erfindung auch der Antrieb eines Kratzbodens und/oder der Antrieb eines Querförderbands in entsprechender Weise mit einem Elektromotor versehen sein, der in der genannten Weise geregelt und die vorgenannte Bestimmungseinrichtung zur Bestimmung der Drehstellung und Drehzahl des Elektromotors aus der Phasenlage des Drehspannungsnetzes aufweist.

Ebenfalls vorteilhaft ist nach einem illustrativen Beispiel der Einsatz eines Elektromotors mit zugehörigem selbstlernendem Regler bei einem Mähwerk, das an einen Schlepper anbaubar ist. Der Elektromotor kann hierbei den Arbeitskorpus des Messerrotors und/oder eine nachgeschaltete Konditionierwalze und/oder einen nachgeschalteten Querförderer antreiben und in der genannten Weise von dem Regler geregelt sein.

Eine weitere vorteilhafte Anwendung ist nach einem illustrativen Beispiel eine Heuwerbungsmaschine in Form eines Schwaders oder eines Zetters, der zumindest einen Rechkreisel aufweist, der um eine aufrechte Drehachse antreibbar ist. Der Elektromotor treibt den Rechkreisel an und wird in der genannten Weise geregelt, um unterschiedlich dicken und/oder dichten Erntegutschwaden und/oder Erntegutschichten, die auf dem Boden liegen, gerecht zu werden.

Ferner ist nach einem weiteren illustrativen Beispiel eine Kreiselegge vorgesehen, deren Rechzinken um üblicherweise aufrechte Drehachsen von einem Elektromotor angetrieben werden können, der in der genannten Weise von dem Regler geregelt wird, um trotz variierender Bodenbeschaffenheit die Kreiselegge im optimalen Betriebspunkt zu halten. Alternativ oder zusätzlich zu dem elektromotorischen Antrieb der Rechzinken kann auch eine Nachläufereinheit wie beispielsweise eine Stabwalze von einem Elektromotor angetrieben werden, der in der genannten Weise geregelt wird.

Ein viertes illustratives Beispiel ist eine Sä- bzw. Drillmaschine, deren Dosierräder elektromotorisch antreibbar sind. Je nach gewünschtem Saatgutaustrag, der ggf. für verschiedene Feldabschnitte variieren kann, werden die genannten Dosierräder über den jeweiligen Elektromotor von der Regeleinrichtung auf die gewünschte Drehzahl geregelt. Alternativ oder zusätzlich zu einem solchen elektromotorischen Antreiben der Dosierräder kann auch eine Reifenpackereinheit der Sä- bzw. Drillmaschine mit einem Elektromotor angetrieben werden, der von dem Regler geregelt wird, um trotz variierendem Fahrwiderstand beispielsweise bei Hang- und Kurvenfahrten die Maschine im optimalen Betriebspunkt, insbesondere bei optimaler Fahrgeschwindigkeit zu halten.

Besonders vorteilhaft ist die Verwendung des drehgeberfreien Elektromotors dann, wenn der Elektroantrieb in einem walzen- und/oder rohrförmigen Antriebsteil des Arbeitsaggregats integriert bzw. in dessen Inneren angeordnet ist.

Die vorliegende Erfindung wird nachfolgend anhand eines bevorzugten Ausführungsbeispiels und zugehöriger Zeichnungen näher erläutert. In den Zeichnungen zeigen:
- Figur 1:: eine schematische Seitenansicht eines Ladewagens, der heckseitig an einen Schlepper angebaut ist, wobei der Ladewagen eine von einem Elektromotor antreibbare Aufnahmevorrichtung sowie eine von einem Elektromotor antreibbare Dosiervorrichtung aufweist, sowie eines frontseitig an einen Schlepper anbaubaren Mähwerks, wobei die Rotoren des Mähwerks jeweils von einem elektrischen Antrieb angetrieben und mittels eines Reglers geregelt sind,
- Figur 2:: eine Draufsicht auf eine heckseitig an einen Schlepper anbaubare Heuwerbungsmaschine in Form eines Schwaders, der vier Schwadkreisel aufweist, die von einem elektrischen Antrieb angetrieben und einen selbstlernenden Regler geregelt sind,
- Figur 3:: eine schematische Draufsicht auf eine heckseitig an einen Schlepper angebaute Bodenbearbeitungsmaschine In Form einer Kreiselegge, deren Kreiselzinken und deren Stabwalze von Elektromotoren angetrieben und mittels eines selbstlernenden Reglers geregelt sind,
- Figur 4:: eine schematische Seitenansicht einer heckseitig an einen Schlepper angebauten Sämaschinenkombination, die elektromotorisch angetriebene Dosierräder sowie eine elektromotorisch angetriebenen Packerradeinheit aufweist, die über einen Regler drehzahlgeregelt sind, und
- Figur 5:: eine schematische Darstellung der Elektronikbaugrupper zur Bestimmung der Drehstellung und Drehzahl des Elektromotors aus der Phasenlage des Drehspannungsnetzes, die in der gezeichneten Ausführungsform an den Frequenzumrichter der Leistungselektronik angegliedert ist.

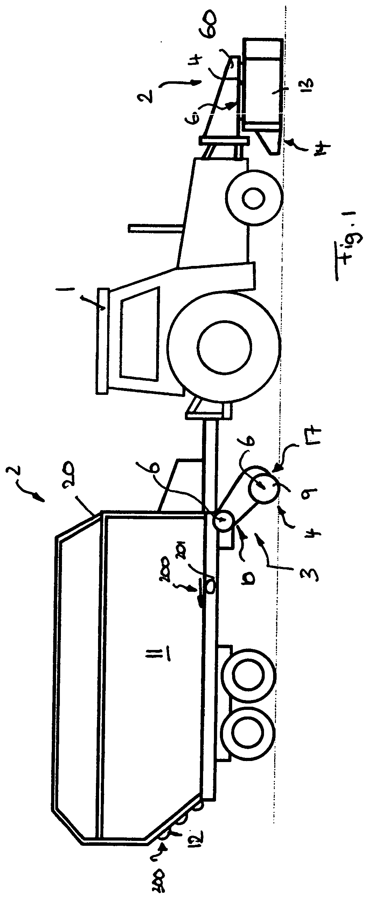

An den in Fig. 1 gezeigten Schlepper 1 ist ein erstes Anbaugerät 2 in Form einer Erntemaschine angebaut, das nach der Erfindung in Form eines Ladewagens 20 ausgebildet ist, sowie ein zweites Anbaugerät 2 in Form eines Frontmähwerks 60 angebaut.

Der in Fig. 1 gezeigte Ladewagen 2 umfasst hierbei mehrere Arbeitsaggregate 3, die jeweils einen drehbar gelagerten Arbeitskorpus 4 umfassen. Ein erstes Arbeitsaggregat 3 bildet hierbei die Pickup 17 umfassend eine Stachelwalze 9 zum Aufsammeln von Erntegut vom Boden. Die Stachelwalze 9, die in der gezeichneten Ausführung, ggf. auch pendelnd aufgehängt sein kann, wird hierbei rotatorisch angetrieben, um am Boden liegendes Erntegut in einen Förderkanal zu fördern. Die genannte Stachelwalze 9 kann in Weiterbildung der Erfindung einen rohrförmigen Arbeitskorpus 4 umfassen, von dessen Umfang stachelförmige Mitnehmerzinken abstehen.

Ein weiteres Arbeitsaggregat 3 ist ein Förderer umfassend einen Förderrotor 10, der das von der Pickup 17 aufgenommene Erntegut übernimmt und in den Erntegutspeicher 11 des Ladewagens 20 fördert. Auch der Förderrotor 10 kann in Weiterbildung der Erfindung einen rohrförmigen Arbeitskorpus 4 umfassen, von dessen Umfang Rotorzinken abstehen, die das Erntegut fördern.

Ein weiteres Arbeitsaggregat 3 des Ladewagens 20 ist ferner ein Kratzboden 200, mit dem das in den Emtegutspeicher 11 geförderte Erntegut in den genannten Erntegutspeicher 11 verteilt und zu einer heckseitigen Speicherwandung bzw. einem dort vorgesehenem Abladeausgang transportiert werden kann. Der genannte Kratzboden 200 umfasst ebenfalls ein rotatorisch antreibbares Antriebselement 201 beispielsweise in Form eines Ritzels, mit dem ein endlos umlaufendes Antriebsorgan des Kratzbodens angetrieben werden kann. Das genannte Antriebselement 201 kann hierbei beispielsweise auf einem wellen- oder rohrförmigen Antriebselement sitzen, das sich quer über den Boden erstreckt.

Ein weiteres Arbeitsaggregat 3 ist eine heckseitig am Erntegutspeicher 11 angeordnete Dosiervorrichtung 300, die beispielsweise mehrere Dosierwalzen umfassen kann, mittels derer das Erntegut beim Abladen aus dem Erntegutspeicher 11 exakt dosiert werden kann. Die genannten Dosierwalzen der Dosiervorrichtung 300 können ebenfalls einen rohrförmigen Arbeitskorpus 4 umfassen, der am Außenumfang angebrachte Mitnehmer umfassen kann.

Um die genannten Arbeitskörper 4 der Arbeitsaggregate anzutreiben, sitzt in der gezeichneten Ausführungsform jeweils im Inneren des jeweiligen Arbeitskorpus 4 ein Elektromotor 6, der vorteilhafterweise vollständig im Inneren des jeweiligen Arbeitskorpus 4 aufgenommen und von dem rohr- bzw. walzenförmigen Arbeitskorpus 4 zumindest umfangsseitig vollständig umschlossen ist. Insbesondere kann der Elektromotor 6 unmittelbar auf der Achse des rohrförmigen Arbeitskorpus 4 sitzen, die auch den genannten Arbeitskorpus 4 abstützt und drehbar lagert. Alternativ zu einem solchen Rohrmotor kann jedoch auch ein herkömmlicher Innenläufermotor Verwendung finden. Der vorgenannte Rohrmotor, der im Inneren des jeweiligen Arbeitskorpus aufgenommen ist, ist indes bevorzugt, da er Vorteile hinsichtlich Platzbedarf und Schutz für den Motor bietet. Je nach Einbausituation kann der Elektromotor 6 jedoch auch ohne einen solchen Rohrmantel eingebaut werden, insbesondere dann, wenn das anzutreibende Arbeitsaggregat keinen rohrförmigen Arbeitskorpus umfasst.

Dabei kann der Elektromotor 6 mit einem nicht eigens dargestellten Getriebe beispielsweise in Form eines mehrstufigen Planetengetriebes verbunden sein, das vorteilhafterweise ebenfalls auf der genannten Achse abgestützt ist und in Weiterbildung der Erfindung ebenfalls im Inneren des Arbeitskorpus aufgenommen sein kann.

Der Elektromotor 6 des jeweiligen Antriebs wird hierbei von einer Regelvorrichtung 30 hinsichtlich Drehzahl und Drehmoment geregelt, um die Arbeitsbewegung des jeweiligen Arbeitsaggregats an die Betriebsbedingungen, insbesondere die Größe und Dichte eines aufzunehmenden Erntegutschwads und die Fahrgeschwindigkeit des Schleppers anzupassen. In Abhängigkeit der jeweiligen Betriebsparameter wie beispielsweise Schwadgröße, Schwaddichte und Fahrgeschwindigkeit gibt die Regelvorrichtung 30 eine Solldrehzahl oder ein Sollmoment für den jeweiligen Elektromotor 6 vor.

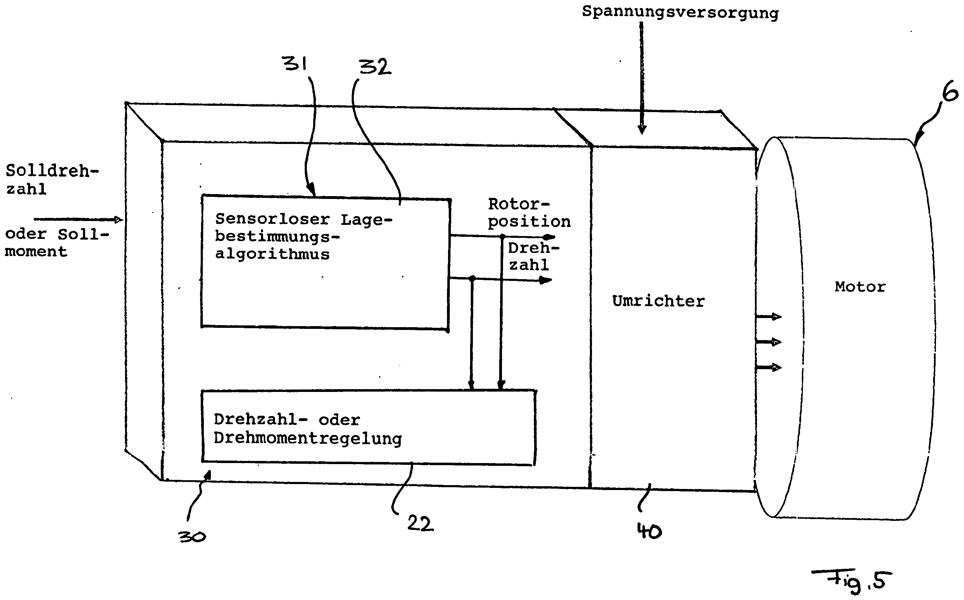

Um den jeweiligen Elektromotor 6 auf die genannte Solldrehzahl bzw. das Sollmoment einregeln zu können, wird die Drehstellung und die Drehzahl des jeweiligen Elektromotors 6 bestimmt, und zwar von einer Bestimmungseinrichtung 31, die in der gezeichneten Ausführungsform nach Fig. 5 zusammen mit dem Umrichter 40 zu einer Elektronikbaugruppe zusammengefasst ist, die eingangsseitig die Solldrehzahl bzw. das Sollmoment und, auf Seiten des Umrichters 40, die Spannungsversorgung erhält, während sie ausgangsseitig den Elektromotor 6 ansteuert, der selbst sensorlos bzw. drehgeberlos ausgebildet ist.

Die genannte Bestimmungseinrichtung 31 umfasst dabei Bestimmungsmittel 32 zur Bestimmung der räumlichen, magnetischen Leitwertschwankungen, aus denen die Drehstellung des Elektromotors 6 bestimmbar ist, wobei vorzugsweise Erfassungsmittel zur Erfassung eines Zwischenkreisstromanstiegs und/oder einer Zwischenkreisspannung und/oder eines aktuellen Schaltzustands des Umrichters 40 vorgesehen sind, woraus von den Bestimmungsmitteln 32 dann die Leitwertschwankung bestimmbar ist. Für die Bestimmung der Rotorposition und der Drehzahl kann hierbei vorgegangen werden, wie in der Schrift AT 502 615 B1 oder der Schrift AT 406 722 B näher erläutert.

Wie Fig. 5 zeigt, werden die bestimmte Drehstellung und die bestimmte Drehzahl von dem Regler 22 verarbeitet und dazu verwendet, den Umrichter 40 anzusteuern, um den Elektromotor 6 auf die gewünschte Solldrehzahl und/oder das gewünschte Sollmoment einzuregeln.

Der Regler 22 kann die Antriebsgeschwindigkeit der Elektromotoren 6 der Arbeitsaggregate variieren, um auf Variationen der äußeren Belastung zu reagieren bzw. diese zu kompensieren. Wird der aufzunehmende Erntegutschwad größer, wodurch die Leistungsaufnahme des Elektromotors 6 der Stachelwalze 9 und/oder des Förderrotors 10 ansteigt, kann der Regler 22 die Drehzahl des Elektromotors 6 erhöhen, um den zunehmenden Erntegutstrom zu bewältigen.

Alternativ oder zusätzlich kann der Regler 22 auch ein Stellsignal für die Fahrgeschwindigkeit des Schleppers bereitstellen, um die Fahrgeschwindigkeit des Schleppers zu verändern und an den variierenden Erntegutstrom anzupassen. Dieses Stellsignal kann entweder in Form einer Anzeige bereitgestellt werden, so dass der Fahrer das Stellsignal umsetzt. Alternativ kann auch eine halbautomatische oder vollautomatische Umsetzung durch einen Fahrgeschwindigkeitsregler vorgesehen sein.

Wird beispielsweise der Erntegutschwad, der von dem Ladewagen 2 aufgenommen werden soll, kleiner, kann der Regler 22 die Fahrgeschwindigkeit erhöhen, um den Ladewagen 2 mit möglichst voller Ausnutzung seiner Leistungsfähigkeit zu betreiben. Das Kleinerwerden des Erntegutstroms bzw. -schwads wird hierbei durch einen Abfall der Leistungsaufnahme des Elektromotors 6 der Stachelwalze 9 und/oder des Förderrotors 10 festgestellt.

In ähnlicher Weise lassen sich auch die weiteren Arbeitsaggregate 3 des Ladewagens 20 sowie die Arbeitsaggregate 3 anderer Ernte- oder Bodenbearbeitungsmaschinen mittels eines einen Elektromotor 6 aufweisenden Antriebs 5 und einem entsprechenden Regler 22 regeln, wie die weiteren Figuren zeigen.

Beispielsweise kann anstelle des in Fig. 1 gezeigten Ladewagens 20 eine Ballenpresse in entsprechender Weise geregelte Elektromotoren aufweisen, beispielsweise zum Antrieb der Stachelwalze der Pickup der Presse und/oder zum Antrieb des Förderrotors, mit dem das Erntegut in die Pressenkammer gefördert wird und/oder zum Antrieb der Arbeitsaggregate der Pressenvorrichtung selbst.

Das in Fig. 1 gezeigte frontseitig angebaute Mähwerk 60 kann in an sich bekannter Weise eine Vielzahl von Messertrommeln bzw. Messerrotoren 13 umfassen, die um aufrechte Achsen antreibbar sind und radial abstehende bzw. ausschwenkbare Messer besitzen, um das stehende Erntegut zu schneiden.

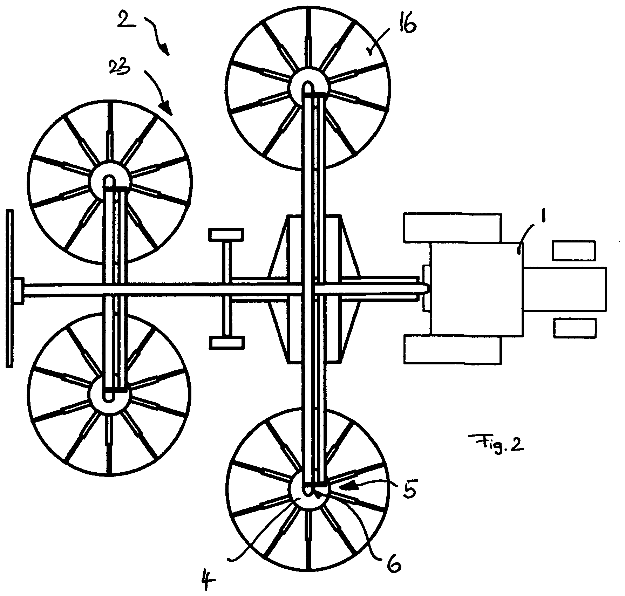

Die genannten Messerrotoren 13 können in ähnlicher Weise wie der Ladewagen 2 rohrförmige Arbeitskorpi 4 aufweisen, in deren Innenraum in der in Fig. 2 gezeigten Weise ein Elektromotor 6 sowie ein Getriebe angeordnet sein können, um die Messerrotoren 13 anzutreiben.

Ohne eigens gezeichnet zu sein, kann das Mähwerk 60 nach der gezeichneten Ausführung auch noch eine den Messerrotoren 13 nachgeschaltete Konditionierwalze umfassen, die das geschnittene Erntegut durch mechanische Bearbeitung konditioniert, insbesondere knickt und/oder die Oberfläche aufbricht, um ein rascheres Trocknen zu ermöglichen. Die genannte Konditionierwalze umfasst vorteilhafterweise ebenfalls einen Arbeitskorpus, in den ein Antrieb umfassend einen Elektromotor und ggf. ein Getriebe integriert ist.

Weiterhin kann das Mähwerk 60 mit einem Querförderer, beispielsweise in Form eines Querförderbands, versehen sein, der der genannten Konditionierwalze nachgeschaltet ist und das geschnittene und konditionierte Erntegut quer zur Fahrtrichtung fördert, beispielsweise um es aus der Spur des Schleppers zu verbringen. Der genannte Querförderer kann vorteilhafterweise ebenfalls einen Arbeitskorpus beispielsweise in Form von Umlenkrollen umfassen, um die das Querförderband umläuft und die durch einen Antrieb umfassend einen Elektromotor und gegebenenfalls ein Getriebe antreibbar sind.

Die Elektromotoren 6 der Messerrotoren 13 und/oder der Konditionierwalze und/oder des Querförderers können in der zuvor beschriebenen Weise von einem Regler 22 gesteuert werden, um auf Variationen der äußeren Belastung zu reagieren bzw. diese zu kompensieren, indem die Leistungsaufnahme des Elektromotors 6 überwacht und entsprechend geregelt wird. Variierende äußere Belastungen können beispielsweise durch einen unterschiedlich dichten und/oder hohen Bewuchs des zu mähenden Feldes bedingt sein.

Wie Fig. 2 zeigt, kann das Anbaugerät 2 auch als Heuwerbungsmaschine in Form eines Schwaders ausgebildet sein, der in der gezeichneten Ausführungsform vier um jeweils eine aufrechte Achse rotatorisch antreibbare Rechkreisel 16 aufweist. Die genannten Rechkreisel 16 der Heuwerbungsmaschine 23 können hierbei jeweils einen Arbeitskorpus 4 umfassen, in den ein Antrieb 5 mit einem Elektromotor 6 und ggf. einem Getriebe integriert sind. Der Elektromotor 6 wird mittels des schon erläuterten Reglers 22 geregelt.

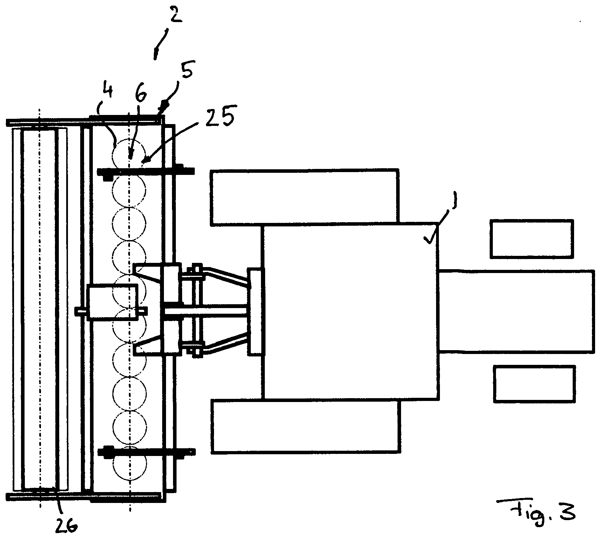

Wie Fig. 3 zeigt, kann das Anbaugerät 2 auch als Kreiselegge ausgebildet sein, die in der gezeichneten Ausführungsform eine quer zur Fahrtrichtung ausgerichtete Reihe von Zinkenkreisel 25 aufweist, die jeweils um eine aufrechte Achse rotatorisch antreibbar sind. Die genannten Zinkenkreisel umfassen dabei jeweils nach unten auf den Boden gerichtete Eggenzinken sowie einen Arbeitskorpus 4, in den ein Antrieb 5 mit einem Elektromotor 6 und ggf. einem Getriebe integriert sind. Die Kreiselegge kann dabei für jeden Zinkenkreisel 25 separat einen Elektromotor 6 besitzen. Alternativ können auch einzelne oder mehrere Zinkenkreisel 25 zu einer Gruppe zusammengefasst sein, die von einem Elektromotor in dem Arbeitskorpus eines Zinkenkreisels angetrieben werden. Wie Fig. 3 zeigt, läuft den Eggenzinken 25 eine Walze 26 nach, die gegebenenfalls durch einen Walzenantrieb antreibbar ausgebildet sein kann. Ein Elektromotor des Walzenantriebs kann in der genannten Walze 26 angeordnet sein. Die Elektromotoren 6 werden in der genannten Weise von dem Regler 22 geregelt.

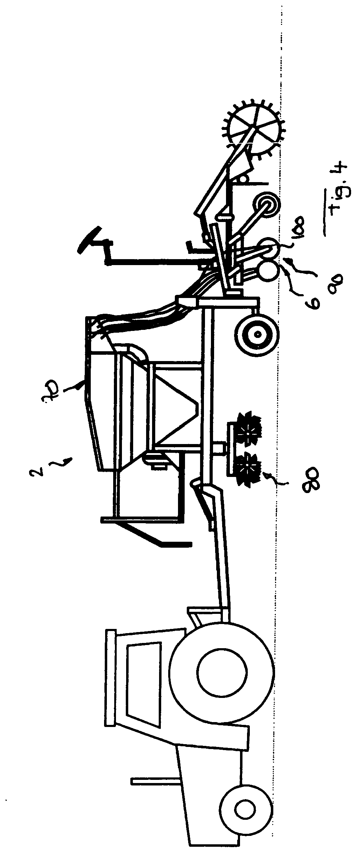

Wie Fig. 4 zeigt, kann das Anbaugerät 2 auch als Sämaschine 70 ausgebildet sein, die in der gezeichneten Ausführungsform in Form einer Sägerätekombination eine vorgeschaltete Bodenbearbeitungsgruppe 80 und die Ausbringeinrichtung 90 zum Ausbringen der Körner des Saatguts umfasst. Die genannte Ausbringeinrichtung 90 umfasst vorteilhafterweise Dosierräder 100, die jeweils von Elektromotoren angetrieben werden können. Ein geeigneter Regler 22 regelt die Drehzahl der Dosierräder 100 in Abhängigkeit von relevanten Betriebsparametern wie Fahrgeschwindigkeit, Soll-Ausbringdichte, die von Feldabschnitt zu Feldabschnitt variieren kann, und beispielsweise Saatgut.

Alternativ oder zusätzlich zu den genannten Dosierrädern 10 kann auch eine Reifenpackereinheit der Sägerätekombination von einem elektromotorischen Reifenpackerantrieb angetrieben werden. Ein geeigneter Regler regelt hier die Drehzahl des Elektromotors des Reiferpackerantriebs und damit die Drehzahl der Packerräder beispielsweise in Abhängigkeit einer Soll-Fahrgeschwindigkeit, die in Abhängigkeit von Bodenparametern oder dem auszubringenden Saatgut variieren kann.

## Patentansprüche

1. Landwirtschaftliche Arbeitsmaschine in Form eines an einen Schlepper (1) anbaubaren Ladewagens, mit
einer Pickup, die mit einer Stachelwalze (9) zur Aufnahme von Erntegut vom Boden versehen ist, wobei
die Stachelwalze (9) über einen Antrieb (5) verfügt, der zumindest einen Elektromotor (6) aufweist, und
eine einen Regler (22) umfassende Regelvorrichtung (30) zur Regelung der Drehzahl und/oder des Drehmoments des Antriebs (5) vorgesehen ist,
**dadurch gekennzeichnet, dass**
der Elektromotor (6) drehgeberlos ausgebildet ist,
die Regelvorrichtung (30) eine Bestimmungseinrichtung (31) zur Bestimmung der Drehstellung und Drehzahl des Elektromotors (6) aus der Phasenlage des am Elektromotor (6) anliegenden Drehspannungsnetzes aufweist, und
der Regler (22) dazu ausgelegt ist, die Drehzahl des Elektromotors (6) der Stachelwalze (9) zu erhöhen, wenn die Leistungsaufnahme des Elektromotors (6) ansteigt.

2. Landwirtschaftliche Arbeitsmaschine nach dem vorhergehenden Anspruch, wobei die Bestimmungseinrichtung (31) Bestimmungsmittel (32) zur Bestimmung der räumlichen, magnetischen Leitwertschwankungen, aus denen die Drehstellung des Elektromotors (6) bestimmbar ist, aufweist, wobei vorzugsweise die genannten Bestimmungsmittel (32) ein Erfassungsmittel zur Erfassung eines Zwischenkreisstromanstiegs und/oder einer Zwischenkreisspannung und/oder eines aktuellen Schaltzustands eines Umrichters (40), woraus von den Bestimmungsmitteln (32) dann die Leitwertschwankungen bestimmbar sind, aufweisen.

3. Landwirtschaftliche Arbeitsmaschine nach einem der vorhergehenden Ansprüche, wobei die Regelvorrichtung (30) einschließlich der Bestimmungseinrichtung (31) als eine vom Elektromotor (6) separat ausgebildete Baugruppe ausgebildet ist, die durch einen Umrichter (40) der Leistungselektronik mit dem Elektromotor (6) verbindbar ist.

4. Landwirtschaftliche Arbeitsmaschine nach einem der vorhergehenden Ansprüche, wobei die Regelvorrichtung (30) und/oder die Bestimmungseinrichtung (31) mit einem Umrichter (40) der Leistungselektronik zu einer Elektronikbaugruppe zusammengefasst ist, die eingangsseitig mit einer Spannungsversorgung und einem Sollwert für die Regelgröße beaufschlagbar ist und ausgangsseitig die Stromversorgung für den Elektromotor (6) bereitstellt.

5. Landwirtschaftliche Arbeitsmaschine nach einem der vorhergehenden Ansprüche, die einen Förderrotor (10) zur Förderung des aufgenommenen Ernteguts in einen Erntegutspeicher (11), einen Kratzboden (200) und/oder eine Dosierwalze (12) zum Entladen des Ernteguts aus dem Erntegutspeicher (11) aufweist, wobei der Antrieb (5) des Förderrotors (10), des Kratzbodens (200) und/oder der Dosierwalze (12) einen Elektromotor (6) aufweist, der von dem Regler (22) geregelt wird.

## Claims

1. An agricultural work machine in the form of a self-loading wagon attachable to a tractor (1), comprising
a pick-up that is provided with a spiked roller (9) for picking up harvest from the ground, wherein
the spiked roller (9) has a drive (5) that has at least one electric motor (6); and
a regulation apparatus (30) comprising a regulator (22) for regulating the speed and/or the torque of the drive (5) is provided,
**characterized in that**
the electric motor (6) is configured free of rotary encoders;
the regulation apparatus (30) has a determination device (31) for determining the rotational position and the speed of the electric motor (6) from the phasing of the three-phase voltage network applied to the electric motor (6); and
**in that** the regulator (22) is adapted to increase the speed of the electric motor (6) of the spiked roller (9) when the power consumption of the electric motor (6) increases.

2. An agricultural work machine in accordance with the preceding claim, wherein the determination device (31) has determination means (32) for determining the spatial magnetic conductance fluctuations from which the rotational position of the electric motor (6) can be determined, with said determination means (32) preferably having a detection means for detecting an intermediate circuit power increase and/or an intermediate circuit voltage and/or a current switched state of an inverter (40), from which the conductance fluctuations can then be determined by the determination means (32).

3. An agricultural work machine in accordance with one of the preceding claims, wherein the regulation apparatus (30), including the determination device (31), is configured as an assembly that is configured separately from the electric motor (6) and that can be connected to the electric motor (6) by an inverter (40) of the power electronics.

4. An agricultural work machine in accordance with one of the preceding claims, wherein the regulation apparatus (30) and/or the determination device (31) is combined with an inverter (40) of the power electronics to form an electronic assembly that can be acted on by a voltage supply and a desired value for the regulation variable at the input side and that provides the power supply for the electric motor (6) at the output side.

5. An agricultural work machine in accordance with one of the preceding claims that has a conveyor rotor (10) for conveying the picked-up harvest into a harvest store (11), a scraper floor (200) and/or a doctor roll (12) for unloading the harvest from the harvest store (11), wherein the drive (5) of the conveyor rotor (10), of the scraper floor (200) and/or of the doctor roll (12) has an electric motor (6) that is regulated by the regulator (22).

## Revendications

1. Machine de travail agricole sous la forme d'une remorque autochargeuse pouvant être montée sur un tracteur (1), comprenant
un ramasseur, qui est pourvu d'un rouleau à pointes (9) pour ramasser le produit de la récolte du sol, dans laquelle
le rouleau à pointes (9) dispose d'un entraînement (5), qui comporte au moins un moteur électrique (6), et
un dispositif de régulation (30) comprenant un régulateur (22) est prévu pour régler la vitesse de rotation et/ou le couple de l'entraînement (5),
**caractérisée en ce que**
le moteur électrique (6) est réalisé sans encodeur,
le dispositif de régulation (30) comporte un dispositif de détermination (31) destiné à déterminer la position de rotation et la vitesse de rotation du moteur électrique (6) à partir de la position de phase du réseau de tension triphasée appliqué au moteur électrique (6), et
le régulateur (22) est conçu pour augmenter la vitesse de rotation du moteur électrique (6) du rouleau à pointes (9) quand la puissance absorbée du moteur électrique (6) augmente.

2. Machine de travail agricole selon la revendication précédente, dans laquelle le dispositif de détermination (31) comporte des moyens de détermination (32) destinés à déterminer les variations de conductance magnétiques spatiales, à partir desquelles la position de rotation du moteur électrique (6) peut être déterminée, lesdits moyens de détermination (32) comportant de préférence un moyen de détection destiné à détecter une augmentation du courant de circuit intermédiaire et/ou une tension de circuit intermédiaire et/ou un état de commutation actuel d'un convertisseur (40), à partir de quoi les variations de conductance peuvent ensuite être déterminées par les moyens de détermination (32).

3. Machine de travail agricole selon l'une des revendications précédentes, dans laquelle
le dispositif de régulation (30) y compris le dispositif de détermination (31) est réalisé sous la forme d'un ensemble réalisé séparément du moteur électrique (6), qui peut être raccordé au moteur électrique (6) par un convertisseur (40) de l'électronique de puissance.

4. Machine de travail agricole selon l'une des revendications précédentes, dans laquelle
le dispositif de régulation (30) et/ou le dispositif de détermination (31) est groupé avec un convertisseur (40) de l'électronique de puissance en un ensemble électronique, qui peut être alimenté côté entrée par une alimentation en tension et une valeur de consigne pour la grandeur de réglage et qui fournit côté sortie l'alimentation en courant pour le moteur électrique (6).

5. Machine de travail agricole selon l'une des revendications précédentes, qui comporte un rotor de transport (10) destiné au transport du produit de la récolte ramassé dans un réservoir pour produit de la récolte (11), un fond mouvant à traverses (200) et/ou un rouleau doseur (12) destiné à la décharge du produit de la récolte hors du réservoir pour produit de la récolte (11), l'entraînement (5) du rotor de transport (10), du fond mouvant à traverses (200) et/ou du rouleau doseur (12) comportant un moteur électrique (6), qui est régulé par le régulateur (22).
